# EUROPEAN PATENT APPLICATION

(11) **EP 3 275 553 A2**
(43) Date of publication of application: **31.01.2018**
(21) Application number: 17183113.4
(22) Date of filing: 25.07.2017
(51) Int. Cl.: B05B 7/00, B65D 83/00, B65D 49/00

(54) **NON-REFILLING AEROSOL VALVE**

(30) Priority: 25.07.2016 US 201662366412 P
(71) Applicant: Precision Valve Corporation, Rye Brook, NY 10573 (US)
(72) Inventor: Plaschkes, Ran, 65375 Oestrich-Winkel (DE); Heetfeld, Rainer, 60389 Frankfurt am Main (DE); Fritzler, Ruben, 1614 Buenos Aires (AR)
(74) Representative: Crawford, Andrew

(57) **Abstract**

An aerosol valve with a refill prevention mechanism is provided. The valve has a valve stem disposed in a valve housing that defines an inner chamber. The valve stem has upper passage in an upper portion of the valve stem that is provided with a flexible resilient member. The flexible resilient member is compressed on an orifice or aperture communicating with the housing to create a seal and prevent filling in an open position when pressure in the upper passage is greater than a pressure in the inner chamber. The flexible resilient member is deflected away from the orifice or the aperture when pressure in the upper passage is less than a pressure in the inner chamber to allow dispensing of a product.

## Description

### BACKGROUND OF THE DISCLOSURE

### 1. Field of the Disclosure

The present disclosure relates to a non-refilling aerosol valve. More particularly, the present disclosure relates to an aerosol valve that dispenses content from an aerosol container, yet prevents the aerosol container from being refilled once the aerosol container has been used or emptied.

### 2. Description of the Related Art

Illicit trade of counterfeit goods is a known problem throughout the world, and particularly in developing countries. However, the problem also exists in developed countries where large amounts of money and resources are expended yearly in attempts to curb the sale and transfer of counterfeit goods.

Consumers in just about every country are confronted with counterfeit goods on a daily basis, yet proliferation is so perverse that it is hardly noticed.

Aerosol containers are one class of goods where counterfeiting is prevalent. Typically, once an aerosol product has been used and the can is emptied, that aerosol container is able to be illegally refilled with counterfeit product and sold as an original. Such empty aerosol containers are known to be refilled with unknown product and then resold on the black market.

Counterfeit goods are dangerous because they can contain unknown and harmful chemicals. For example, counterfeit goods can contain much higher amounts of methanol than would be present in a genuine product. It is well known that methanol is toxic to humans. Methanol toxicity causes blindness and potentially death, even if as little as 10 to 30 mL is ingested.

here are known processes for refilling aerosol containers. Such processes include cold fill or filling and pressure fill or filling that are the most common. The cold fill process uses the chemical properties of certain ingredients that will liquefy when cooled. The pressure fill process uses the fact that certain ingredients will liquefy when placed under pressure. The cold fill process requires appropriate manufacturing equipment and cooling systems. The pressure fill process, on the other hand, can be carried out at room temperature. In the pressure fill process, the product concentrate is placed in the can or container, the valve assembly is inserted and crimped into place, and then liquefied gas under pressure is added through the valve. The pressure fill process is thus often used to refill aerosol containers with counterfeit product.

Warning labels, press releases, news coverage, and other such forms of communicating the dangers of counterfeit products have limitations because it can be impossible to distinguish between a counterfeit aerosol container and a genuine aerosol container. Accordingly, such communications are not adequate to protect consumers.

Accordingly, there is a need for a mechanism to prevent the refilling of an aerosol container.

### SUMMARY OF THE DISCLOSURE

The present disclosure provides an aerosol valve for an aerosol container or can that prevents refilling of the container after an original filling and subsequent use.

The present disclosure also provides such an aerosol valve that dispenses the original content, yet prevents refilling of the can after use, that is after dispensing of the original contents therefrom.

The present disclosure further provides such an aerosol valve having a resilient member inside the valve stem that serves as a one-way valve to allow the content to flow in only one direction, i.e. out of the can.

The present disclosure still further provides such an aerosol valve having a resilient member that blocks and seals the orifice in the valve when attempts to forced flow fill aerosol into the can are made.

The present disclosure yet further provides such an aerosol valve with a refilling prevention feature that is simple, economical, and makes use of existing parts, tooling, and assembly lines.

The present disclosure provides a non-refillable aerosol valve with a resilient member that interfaces only with the stem itself.

The present disclosure provides a non-refillable aerosol valve with a combination of resilient members that interface with each other and with the stem itself.

The present disclosure further provides a non-refillable aerosol valve with a resilient member that has improved safety over prior art devices because the valve disables the refill ability with non-conforming product formula.

### DESCRIPTION OF THE SEVERAL VIEWS OF THE DRAWINGS

FIG. 1A is a cross-sectional schematic of an aerosol valve of the prior art in a closed position.
FIG. 1B is a cross-sectional schematic of an aerosol valve of FIG. 1A in an open position.
FIG. 1C is a cross-sectional schematic of an aerosol valve of FIG. 1A in a filling position.
FIG. 1D is a cross-sectional cutaway of a valve stem according to FIGS. 1A to 1C.
FIG. 2 is a partial, cross-sectional view with an exploded portion indicated as detail E of an aerosol valve assembly according to the first embodiment of the present disclosure and in a filling position.
FIG. 3 is a partial, cross-sectional view with an exploded portion indicated as detail C of the aerosol valve assembly of FIG. 2 in a closed position.
FIG. 4 is a partial, cross-sectional view with an exploded portion indicated as detail D of the aerosol valve assembly of FIG. 2 in an open position.
FIG. 5A is side view of a valve stem according to the first embodiment of the present disclosure.
FIG. 5B is a cross-sectional schematic of the valve stem of FIG. 5A.
FIG. 5C is a side view of a resilient member according to the first embodiment of the present disclosure.
FIG 5D is a cross-sectional schematic of the resilient member of FIG. 5C.
FIG. 5E shows an exemplary assembly of the valve stem assembly with an exploded portion indicated as detail A of FIG. 2.
FIG. 5F is a cross-sectional view of the valve stem assembly of Figure 2.
FIG. 5G is an exploded assembly view of the valve stem assembly, housing, and mounting cup of FIG. 2.
FIG. 5H is a cross-sectional view of an exemplary assembly of the aerosol valve assembly of FIG. 2.
FIG. 6A is a cross-sectional view of a second embodiment of a valve assembly according to the present disclosure shown in the closed position.
FIG. 6B is the valve assembly of FIG. 6A shown in the open position.
FIG. 6C is an exploded view of the valve assembly of FIG. 6A.
FIG. 6D is a cross-sectional view that shows the refill prevention mechanism of the second embodiment in the closed position.
FIG. 6E is a cross-sectional view that shows the refill prevention mechanism of the second embodiment in the open position.
FIG. 7A is a cross-sectional view of a third embodiment of a valve assembly according to the present disclosure shown in the closed position.
FIG. 7B is the valve assembly of FIG. 7A shown in the open position.
FIG. 7C is an exploded view of the valve assembly of FIG. 7A.
FIG. 8A is a duckbill valve according to the valve assembly of FIG. 7A shown in the closed position.
FIG. 8B is the duckbill valve of FIG. 8A shown in the open position.
FIG. 9A is a cross sectional view of a fourth embodiment of a valve assembly shown in the open position. with an exploded portion indicated as detail A
FIG. 9B is a cross sectional view of the valve assembly of FIG. 9A shown in the closed position with an exploded portion indicated as detail B.
FIG. 9C is an exploded view of the valve assembly of FIG. 9B.
FIG. 9D shows an exemplary valve stem assembly of the fourth embodiment.
FIG. 10A is a cross-sectional view of a fifth embodiment of a valve assembly according to the present disclosure shown in the closed position.
FIG. 10B is the valve assembly of FIG. 10A in the open position.
FIG. 10C is an exploded view of the valve assembly of FIG. 10A.
FIG. 10D shows the refill prevention mechanism of the valve assembly of FIG. 10A in the closed position.
FIG. 10E shows the refill prevention mechanism of the valve assembly of FIG. 10A in the open position.
FIG. 11A is a cross-sectional view of a sixth embodiment of a valve assembly according to the present disclosure shown in the closed position.
FIG. 11B is the valve assembly of FIG. 11A shown in the open position.
FIG. 11C is an exploded view of the valve assembly of FIG. 11A.
FIG. 12A is a cross-sectional view of a seventh embodiment of a valve assembly according to the present disclosure shown in a closed position.
FIG. 12B is perspective view of FIG. 12A.
FIG. 12C is a cross-sectional view of the seventh embodiment shown in an open position
FIG. 12D is perspective view of FIG. 12C.
FIG. 12E is a is a cross-sectional view of the seventh embodiment shown in a filling position.
FIG. 12F is an exploded view of the valve assembly of FIG. 12A.

### DETAILED DESCRIPTION OF THE DISCLOSURE

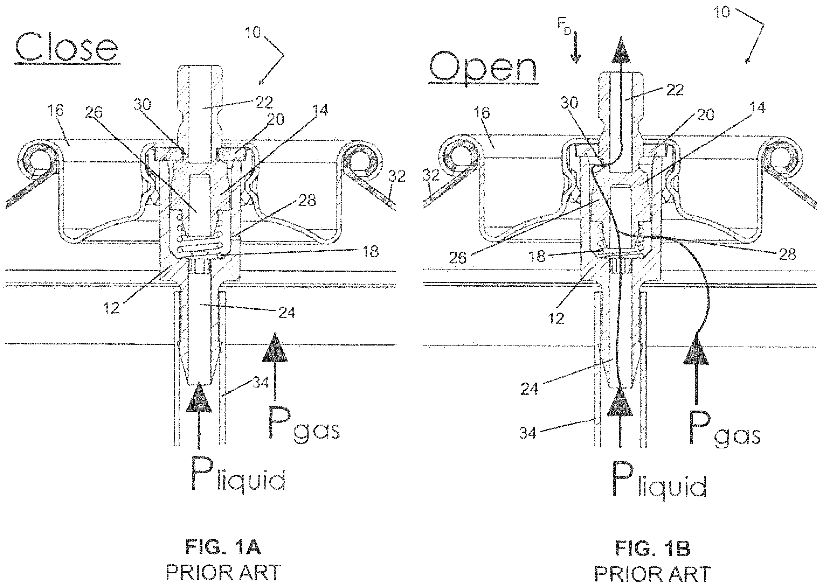

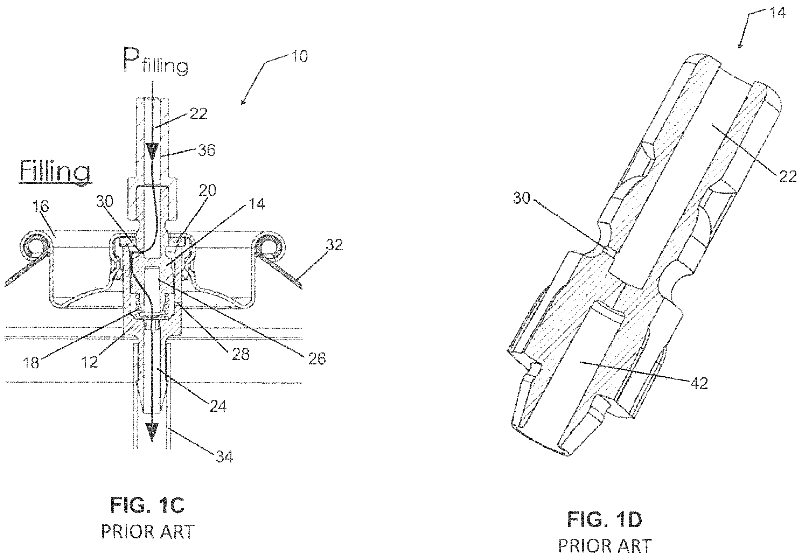

Referring to the drawings, and in particular to FIGS. 1A to 1C, there is shown an aerosol valve assembly 10 according to the prior art. Aerosol valve assembly 10 has a housing 12, a stem 14 in housing 12, a spring 18 positioned below and about the stem, a chamber 26 formed in the stem, and a pair of passages 22, 24, and their respective orifices 28, 30. Assembly 10 also has a mounting cup 16, gasket 20 between the mounting cup and housing 12, a container 32 for connection the mounting cup, and a dip tube 34 connected to the housing about passage 24. FIG. 1D shows stem 14 that has passage 22 in communication with orifice 30, and a partition separating a lower passage 42 of the stem that resides in chamber 26.

FIG. 1A shows aerosol valve assembly 10 in a closed position, with the contents (not shown) exerting pressure in container 32, namely P_liquid and P_gas. In the closed position, the contents remain in container 32. In this closed position, gasket 20 provides a seal against orifice 30. Moreover, spring 18 is situated on a base portion of housing 12, and is biasing against stem 14, urging orifice 30 to be sealing alignment with gasket 20, thus providing a seal.

FIG. 1B shows aerosol valve assembly 10 in an open position. A force, F, when downwardly applied to stem 14 and against the bias of spring 18, displaces stem 14 so that orifice 30 moves away from the gasket 20 thereby creating fluid communication from chamber 26, passage 22 and the atmosphere external to container 32. P_liquid urges the contents of container 32 up through dip tube 34, into passage 24 of housing 12 which is in fluid communication with chamber 26. P_gas urges a propellant (not shown) into housing 12 through orifice 28. In chamber 26, the contents of container 32 and the propellant mix as they are forced through orifice 30 of the valve stem and up and out passage 22.

FIG. 1C shows aerosol valve assembly 10 in a filling position, which is structurally of the same as the open position. In the open position, the contents of container 32 are discharged therefrom. In the filling position, however, the contents are being charged in container 32. A filling member 36 attaches to a top portion of stem 14 and communicates with passage 22. Stem 14 is biased so that orifice 30 is unobstructed by gasket 20. Container 32 is filled with the desired contents by pressure exerted by filling member 36 so that content flows into passage 22 of stem 14 and continues to flow through orifice 30 into chamber 26, then through passage 24 thereby filling container 32.

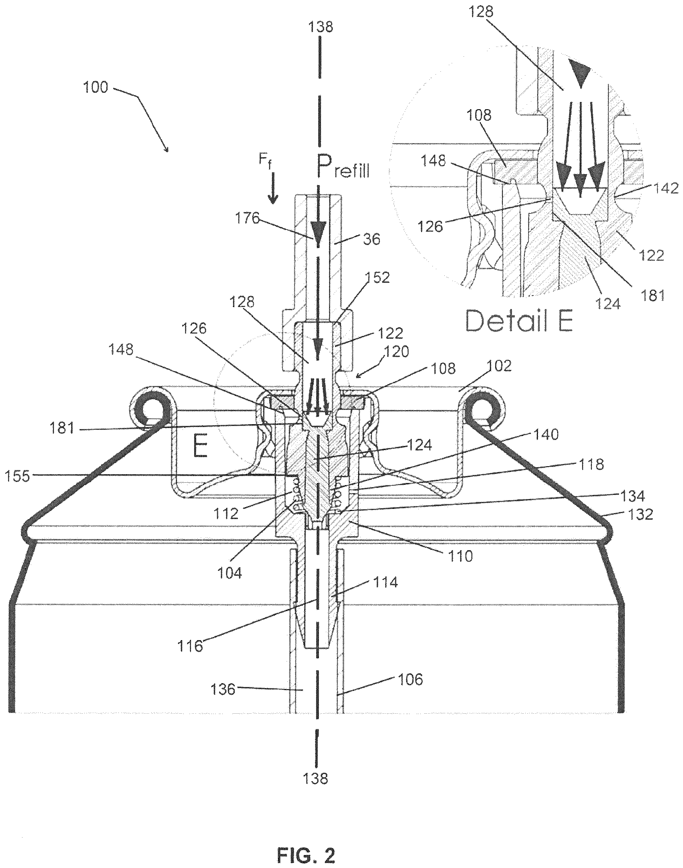

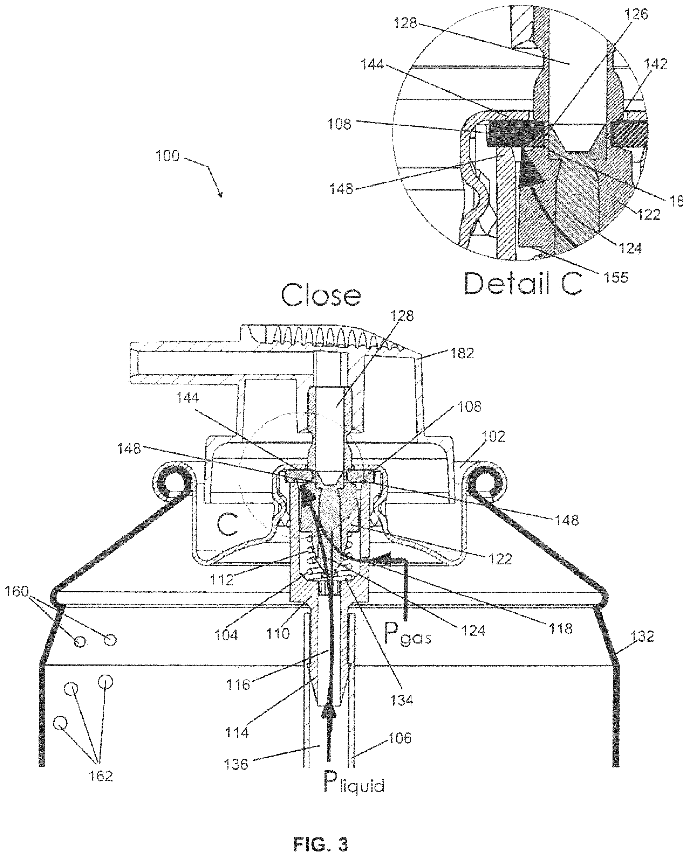

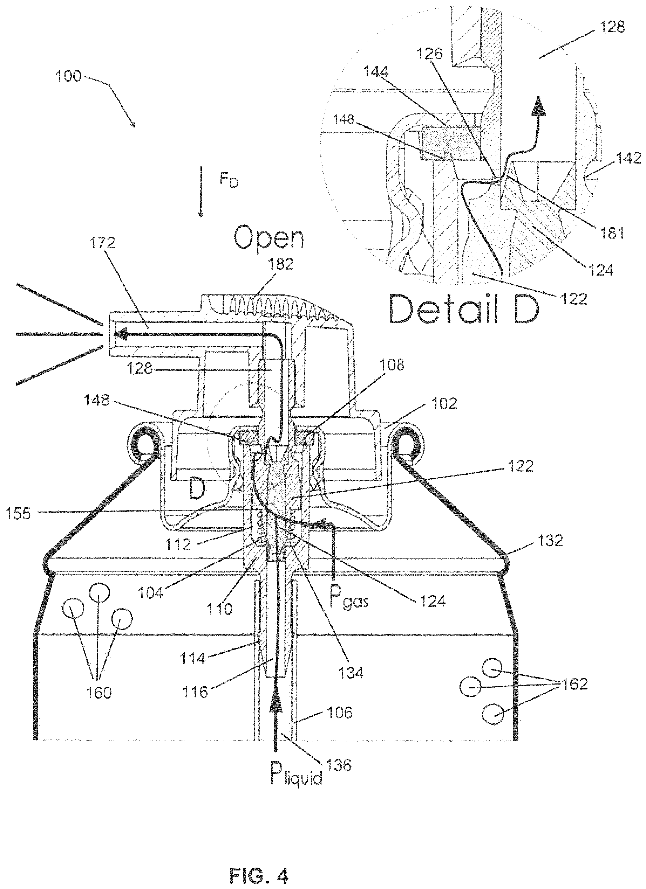

FIGS 2, 3, and 4 show an aerosol valve assembly according to a first embodiment generally represented by reference numeral 100. FIG. 2 shows assembly 100 in a filling position. FIG. 3 shows assembly 100 in a closed position. FIG. 4 shows assembly 100 in an open position.

Assembly 100 includes a valve housing or housing 110, a mounting cup 102 positionable on the housing, a biasing member 104 in the housing, a dip tube 106 connectable to the housing, a sealing member 108, and a stem assembly 120 movable in the housing. Housing 110 has a chamber 112, a tail piece 114, a passage 116, and an orifice 118.

Housing 110 provides an enclosure for biasing member 104 to force stem assembly 120 up against sealing member 108 to enable a seal. Biasing member 104 can be a compression spring, a constant spring, a variable spring, a coil or helical spring, and the like.

The lower protruding portion of housing 110 is tail piece 114 that serves as a connection with dip tube 106. The housing also has a chamber 112 which is in communication with passage 116. Chamber 112 is a cylindrical cavity above the tail piece and passage 116 and has a larger internal diameter than and internal diameter of the passage. Chamber 112 has, at a base proximate the tail piece, a seat 134 that serves as a mounting location and support surface for biasing member 104.

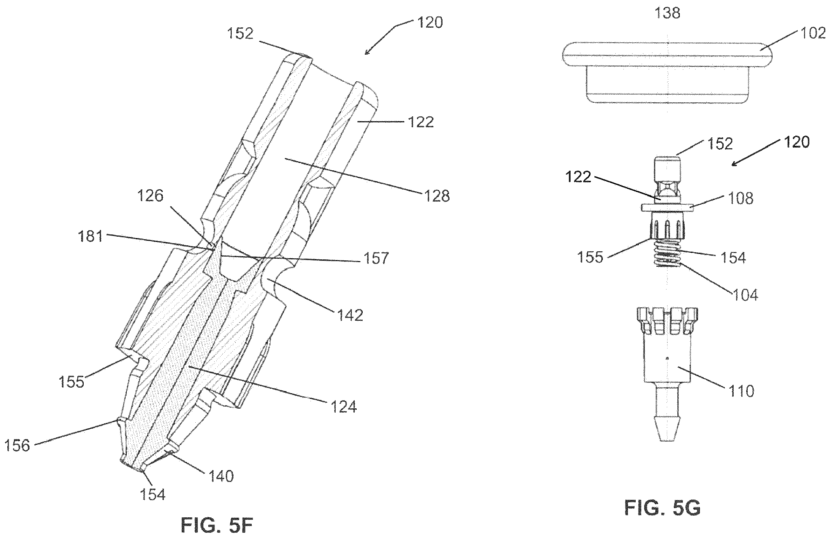

Referring to FIG. 5F, stem assembly 120 has a stem 122, a resilient member 124, an orifice 126, and a passage 128.

Stem 122 of stem assembly 120 is disposed in chamber 112 and extends though sealing member 108 and mounting cup 102. Stem 122 is supported by the top end of biasing member 104. Stem 122 is moveable along a longitudinal axis 138 through the center of housing 110 from a first or closed position (FIG. 3) to a second or open position (FIG. 4). Stem 122 serves the following functions. Stem 122 serves as the connecting transfer conduit between the internal components and an external actuator 182. Stem 122 also provides an essential metering component for controlling product delivery rate, namely through its one orifice 126 in the preferred embodiment of FIGS. 2-4. In other preferred embodiments, stem 122 can have two, three, four or more orifices. In embodiments with more than one orifice 126, the orifices can be spaced apart either equally or unequally about the circumference of stem 122.

In the embodiment of FIGS. 2-4, orifice 126 has a diameter in a range from about 0.012 inches to about 0.035 inches, preferably from about 0.012 inches to about 0.03 inches, and most preferably from about 0.012 inches to about 0.02 inches. Orifice 126 can be round or slotted in shape.

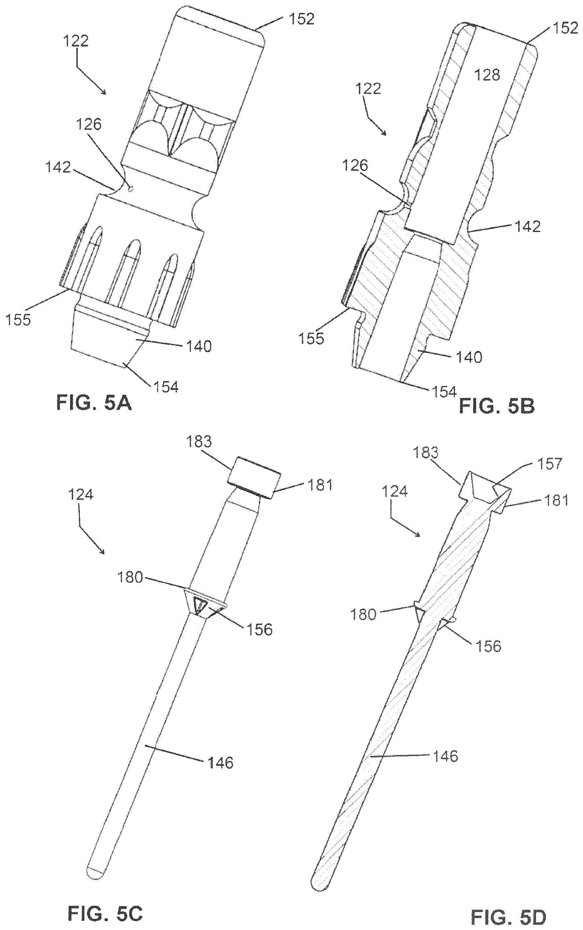

Referring to FIGS. 5A and 5B, stem 122 has a passage 128 therethrough that is hollow from a top 152 down to a bottom 154. Stem 122 also includes a biasing seat 155 that rests, upon assembly, on biasing member 104. Biasing seat 155 is a flat surface that forms a shoulder on an outer diameter of stem 122 and provides a flat surface to facilitate assembly and maintain a vertical orientation of the stem.

Stem assembly 120 also includes resilient member 124 disposed in stem 122 that advantageously prevents through the valve refilling, and is further discussed below. Resilient member 124 is the refilling prevention mechanism and is preferably in housing 110. Resilient member 124 should be elastic and stretchable, made from an elastomeric material, such a thermoplastic elastomer (TPE), rubber, and the like. Importantly, such materials have the ability to be stretched to moderate elongations and, upon the removal of stress, return to something close to the original shape. TPEs exhibit the advantages typical of both rubbery materials and plastic materials.

The upper part of biasing member 104 is interlinked with a stem bottom 140 of stem 122, and the lower part of biasing member 104 is held in the housing on seat 134. Biasing member 104 helps the valve to return to its closed position after the applied force on stem 122 is removed. Biasing member 104 also tightly holds the bottom surface of sealing member 108 through the top of a stem shoulder 142. Shoulder 142 serves as stopper to prevent stem 122 from escaping the assembly. A hermetic seal is achieved among sealing member 108, mounting cup 102, and housing 110, by crimping the mounting cup during a final assembly.

Housing 110 is constructed so that a shoulder 148 on the housing fits tightly against sealing member 108. Again, stem 122 extends down into housing 110 towards biasing member 104.

In the unactuated or closed position shown in FIG. 3, stem 122 is forced up against sealing member 108 by biasing member 104. Also, orifice 126 is closed off and sealed by sealing member 108. Sealing member 108 is in contact with the content of the aerosol contained in container 132.

Upon actuation as shown in FIG. 4, stem 122 is depressed by a downward force F_{D} on actuator 182. Stated another way, movement of stem 122 to the open position occurs. Consequently, orifice 126 is moved down and away from sealing member 108 so that orifice 126 opens to an interior of container 132. The aerosol product contained therein can then leave container 132 through passage 128 and conduits in actuator 182.

Sealing member 108 must withstand both liquid and vapor phase contact without excessive permeation, swelling, distortion, or shrinkage. Specifically, pressure in container 132 (i.e., an aerosol) forces the product up dip tube 106 and into housing 110. From housing 110, the product enters the now exposed orifice 126 and travels up stem 122 through passage 128 and out actuator 182. Sealing member 108 is slightly deflected during actuation. Dispensing is enabled because stem 122 moves axially within a circumference of sealing member 108 until orifice 126 is exposed to chamber 112. Sealing member 108 seals stem orifice 126 circumferentially.

Dip tube 106 connects or attaches to tail piece 114 of housing 110. Dip tube 106 has a channel 136 therethrough that communicates with passage 116. Dip tube 106 can be made of a flexible material or a rigid material. Preferably, dip tube extends from tail piece 114 to a bottom portion of container 132.

Sealing member 108 is a gasket or mechanical seal. Sealing member 108 is disposed on top of housing 110 and below mounting cup 102. Sealing member 108 must flex with each actuation. Sealing member 108 maintains a substantially gas tight seal at stem shoulder 142, even when repeatedly flexed during the numerous actuations over the life of the valve. A substantially gas tight seal is a seal that prevents all but negligible leaking, and is well understood in the art.

Assembly 100 can be mounted on a container 132 by mounting cup 102 that has several essential functions. Mounting cup 102 serves as a crimping unit that holds housing 110, sealing member 108, biasing member 104, and stem 122 together in a connection that is both air and gas tight and allows sealed axial movement of stem 122 within sealing member 108. Mounting cup 102 also acts as a fitment to hermetically seal the valve to the can, using a crimping or clinching method to create a gasketed seal. Mounting cup 102 further acts an attachment area for spouts, actuators, and other over caps. In addition, mounting cup 102 orients valve stem 122 vertically with respect to container 132.

Referring to FIGS. 5C and 5D, resilient member 124, prior to assembly, includes a tailpiece 146 that is used for the purpose of assembling stem assembly 120. Resilient member 124 has a cylindrical conical mushroom shaped flange 156 at the upper end of tailpiece 146. At a top portion, resilient element 124 has a cylindrical head 183 with a cylindrical exterior surface, and an orifice inner sealing surface 181. Orifice inner sealing surface 181 provides a flexible seal against orifice 126. A conical sealing interface 157 is formed from a conical void in cylindrical head 183. Flange 156 has a sealing interface 180 that prevents product from flowing through valve stem assembly 120 and into, or out of, container 132. Sealing interface 180 permanently seals the portion of passage 128 below orifice 126. Once the valve is assembled, biasing member 104 will surrounded sealing interface 180, as shown in FIG. 5G.

Sealing interface 180 is conical in shape to guide and center resilient member 124 into stem 122 during assembly and to make it easy to pull the resilient element into the stem 122 without causing damage to the resilient member or the material from which the resilient member is made. Sealing interface 157 is conically shaped to provide hydraulic sealing that increases the sealing tightness as the refilling pressure rises.

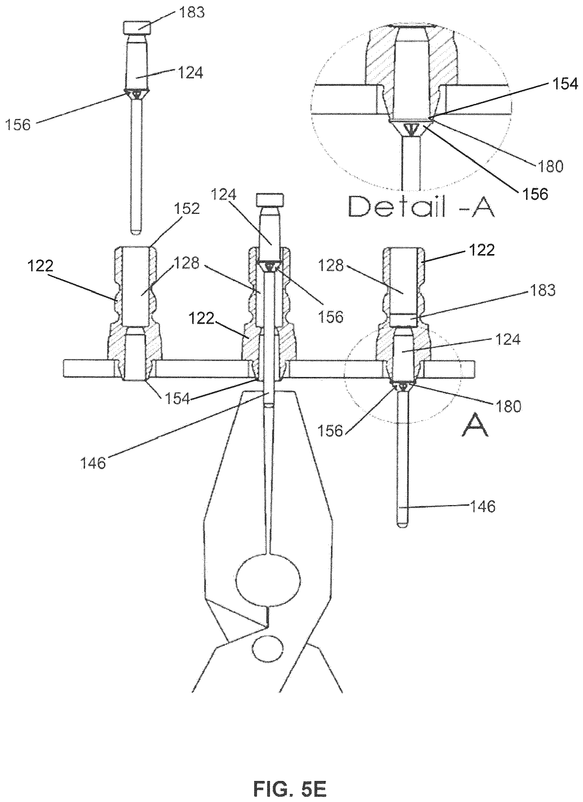

FIG. 5E shows a typical process of making stem assembly 120 [not numbered in FIG. 5E]. Resilient member 124 is inserted into stem 122 with tailpiece 146 inserted in top 152, through passage 128, and through bottom 154. Flange 156 is pulled through and projects outward from bottom 154 as shown in detail A. Tailpiece 146 is then trimmed or cut off. Stem assembly is shown in FIG. 5F.

Alternatively, and in certain embodiments, stem 122 and resilient member 124 are manufactured as one piece using injection molding methods, such as two component ("2C") or over-molding.

FIG. 5G. shows assembly 100 with biasing member 104 assembled on top of bottom 154 and 140 of stem 122 so that it is supported by biasing seat 155 of stem 122. Sealing member 108 is placed over and around top 152 of stem 122, then pushed downward until it is seated and surrounds stem shoulder 142 that is shown in FIG 5F, but hidden by the sealing member in FIG. 5G.

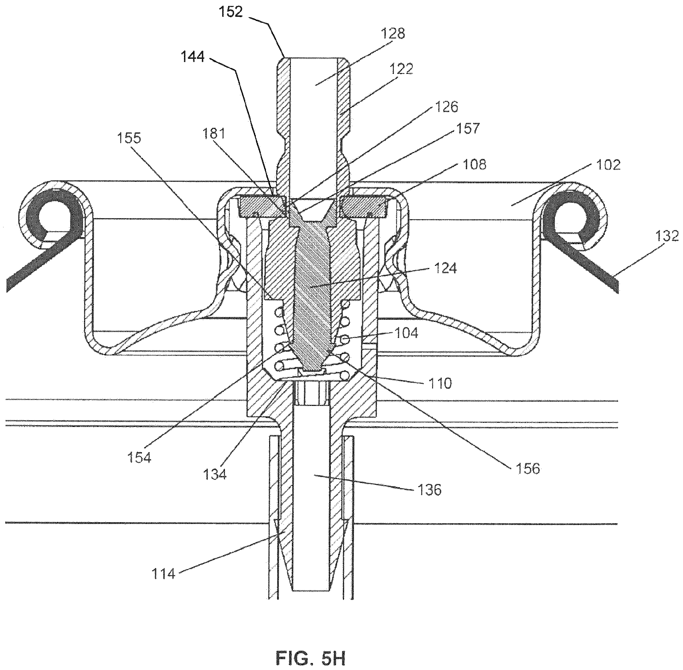

Next, the above described portion of assembly 100 is placed inside housing 110 until biasing member 104 is supported by seat 134 of housing 110, as shown in FIG. 5H, so that stem 122 can move axially and flexibly inside. Mounting cup 102 is placed on top of the housing 110 so that top 152, of stem 122 projects therethrough and a cup pedestal bottom 144, an inner surface of the mounting cup 102, overlaps sealing member 108.

Then, mounting cup 102 is crimped. At that point, the valve is assembled and orifice 126 is sealed by sealing member 108 on an outer surface of stem 122, and by resilient member 124 on an inner surface of stem 122, and more specifically by orifice inner sealing surface 181 as shown in FIG. 5H.

Finally, the overall assembly 100 is clinched to container 132 (i.e., an aerosol container) during a filling process and according to known filling methods. However, the container 132 with valve stem assembly 120 cannot be filled using the pressure counterfeiting filling technique as known in the art, through the stem orifice filling.

FIG. 5G is an exploded view that shows the arrangement of parts of assembly 100 about longitudinal axis 138 discussed above. Stem 122 is fitted with sealing member 108 and biasing member 104. Stem assembly 120 is inserted through an aperture in mounting cup 102 at top 152. Housing 110 encloses the remainder of stem assembly 120, with biasing member 104 resting between biasing seat 155 and seat 134. The resulting assembly 100 is shown in FIG. 5H. Bottom 154 and flange 156 are surrounded by biasing member 104.

Operation of aerosol valve assemble 100 will now be discussed.

Referring to FIG. 2, container 132 does not have product or propellant therein. Assembly 100 is refilled by a filling member 36 that has a passage 176 that communicates with passage 128 of stem 122. Filling member 36 mates to top 152 of stem 122.

Filling member 36 pushes down and into housing 110 by an axial force Ff, deflecting sealing member 108 and sliding down until orifice 126 is exposed to chamber 112. As described above, assembly 100 comprises an anti-refill mechanism which prevents refilling of the empty aerosol container after usage, i.e., resilient member 124. From filling member 36, product flows under pressure through passage 128 of stem 122. However, since orifice 126 is covered by the conical sealing interface 181 of resilient member 124, a flow of material inside the valve is prevented as shown in Detail E.

In FIGS. 3 and 4, container 132 is full and thus under pressure from the internal gases and materials. Internal to container 132, is a propellant 160 and product 162.

Propellant 160 is a compressed gas or a pressurized gas in equilibrium with its liquid at a saturated vapor pressure. Product 162 is a liquid, solid or gas that is desired to be dispensed from container 132. In an exemplary embodiment, the partial pressure of propellant 160 (P_gas) and the partial pressure of product 162 (P_liquid) is the total pressure (P_total) within container 132.

In FIG. 3, container 132 is not actuated, i.e., actuator 182 is not pressed down. Aerosol dispensing is disabled because sealing member 108 seals orifice 126 as shown in Detail C. Because of the internal pressure and, in part, biasing member 104, stem 122 is urged against sealing member 108, which is urged against cup pedestal bottom 144.

In FIG. 4, assembly 100 is actuated. Actuator 182 is pressed down and stem assembly 120 is displaced downward through an aperture centered on mounting cup 102. Sealing member 108 deflects with respect to stem 122, but remains in place between cup pedestal bottom 144 and shoulder 148 as shown in Detail D. Biasing member 104 is compressed between seat 134 and stem 122 and, more specifically, biasing seat 155. The axial movement of assembly 120 exposes orifice 126 to chamber 112. Product 162 flows up passage 116 because of the pressure differential inside and outside of container 132.

Orifice 126 is exposed to chamber 112 and the inner volume of the housing 110, thus enabling the aerosol dispensing. Since the pressure in the upper part of stem 122, such as passage 128, is atmospheric, product 162, which is under pressure inside container 132, flows through orifice 126, deflecting orifice sealing surface 181, and then through a path 172 in actuator 182. Resilient member 124 does not prevent outward flow of product 162. Rather, resilient member 124 flexes into passage 128 and away from orifice 126.

It is believed that the minimum internal pressure required to deflect orifice sealing surface 181 is about 2 bar.

Upon release of actuator 182, biasing member 104 pushes back against stem 122 which consequently returns to the position from which it was displaced, as shown in FIG. 3. Importantly, orifice 126 is again sealed by the sealing member 108, and dispensing is disabled.

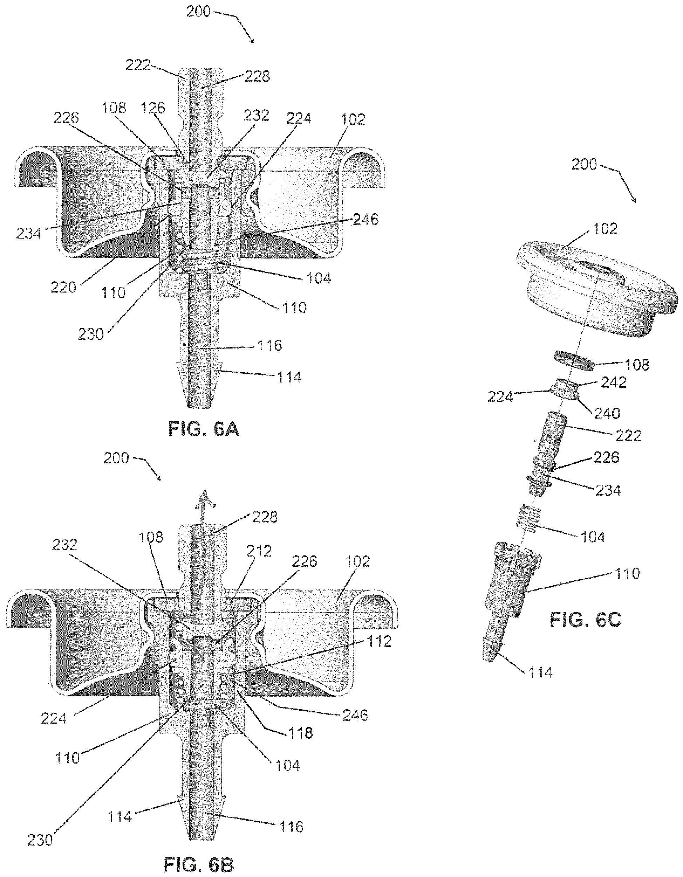

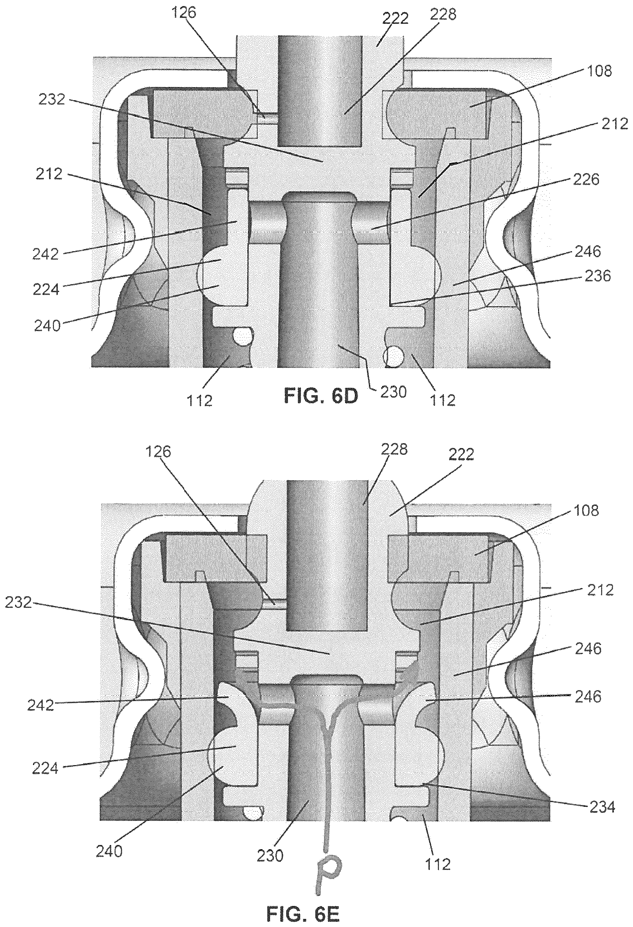

A second exemplary embodiment is shown in FIGS. 6A to 6E. FIGS. 6A and 6D show an aerosol valve assembly 200 in the closed position. FIGS. 6B and 6E show aerosol valve assembly 200 in the open position. FIG. 6C is an exploded assembly view.

Similar to assembly 100, assembly 200 includes a mounting cup 102, a biasing member 104, a sealing member 108, and a valve housing or housing 110. Housing 110 has a chamber 112, a tail piece 114, a passage 116, and an orifice 118.

Referring to FIGS 6A and 6B, assembly 200 has a stem assembly that includes a stem 222, which has a resilient member 224, an orifice 126, and passages 228 and 230.

Unlike stem 122, stem 222 is not hollow. Further, stem 222 has a partition 232 separating passage 228 and passage 230. Orifice 126 is through stem 222 and in communication with passage 228 and chamber 112. Communication with chamber 112 occurs only when the valve is actuated. Partition 232 is below Orifice 126. Passage 230 is in communication with at least one orifice 226 which is below partition 232 and through stem 222. Orifice 226 communicates passage 230 with chamber 112. Passage 230 is also in communication with passage 116.

Referring to FIG. 6C, resilient member 224 is a single piece gasket having a portion 240 and 242. Resilient member 224 should be elastic and stretchable, and made from an elastomeric material, such a thermoplastic elastomer (TPE), rubber, and the like. Portion 242 is structured as a band, whereas portion 240 is structured as a donut, with each portion being concentric to the other. Portion 242 is disposed vertically from portion 240 and has a thickness that is less than the thickness of portion 240. Since portion 242 has less thickness, portion 242 can flex more readily than portion 240. Portion 242 must flex under internal pressures upon actuation, whereas portion 240 remains affixed to stem 222.

Portion 240 can be disposed in a groove 234 to assist with positioning during assembly. Groove 234 is disposed below passage 228 and around a circumference of stem 222 that includes orifice 226 as shown more clearly in FIG 6C.

Resilient member 224 fits over and around an outer diameter of stem 222. Portion 242 covers and seals orifice 226 as shown in FIG. 6D. Portion 240 extends from stem 222 to housing wall 246, thereby defining a chamber 112 and chamber 212. Thus, as shown in FIGS. 6A and 6D, the communication between passage 228 and chamber 212 is sealed by sealing member 108, and the communication between chamber 212 and passage 230, which opens into chamber 112, is sealed by portion 242. Accordingly, there is no flow of product.

Orifice 226 has a diameter in a range from about 0.015 inches to about 0.06 inches, preferably from about 0.02 inches to about 0.05 inches, and most preferably from about 0.03 inches to about 0.04 inches. Orifice 226 can be round or slotted in shape.

When stem 222 is pressed down, as in FIGS. 6B and 6E, orifice 126 is moved away from sealing member 108. Product flows up tail piece 114 through passage 116, into chamber 112, through passage 230, into orifice 226, then through orifice 226 into chamber 212. Portion 242 is deflected away from orifice 226 as a result of the positive pressure in passage 230. Product then flows through orifice 126 and up passage 228.

Advantageously, resilient member 224 prevents refilling through the stem. Specifically, under refilling pressure, portion 242 is deflected toward orifice 226, thereby enhancing the seal and preventing product from flowing into the can.

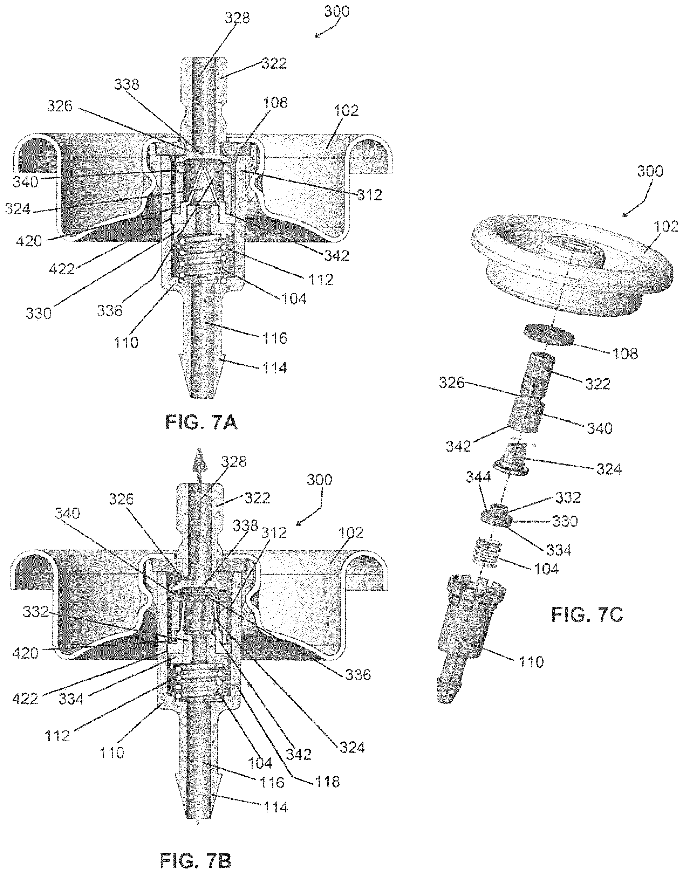

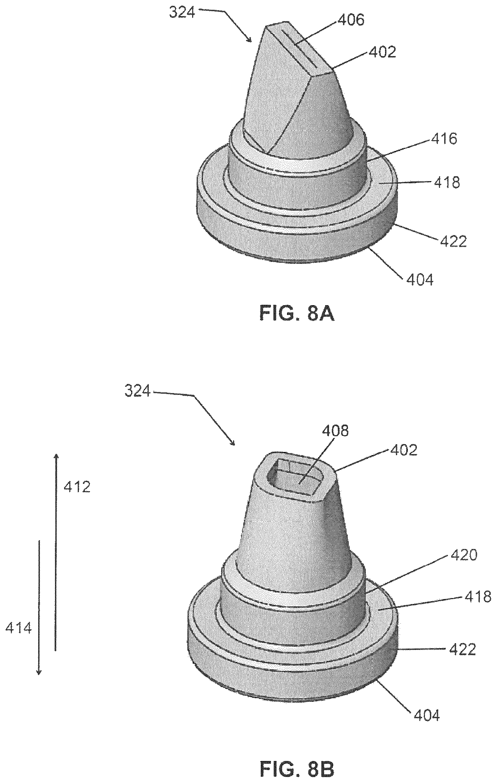

A third exemplary embodiment is shown in FIGS. 7A to 7C as valve assembly 300. Assembly 300 includes mounting cup 102, housing 110, sealing member 108, and biasing member 104. Assembly 300 also includes a stem 322, a duckbill valve 324 shown in FIG 8A and 8B, and a support feature 330 that is a separate fixing feature which serves as solid spring support for interfacing with biasing member 104. Duckbill valve 324 is a resilient member.

Stem 322 has a partition 338 which vertically separates an upper passage 328 and a lower passage 336. Stem 322 has an orifice 326 communicating an outer surface of the stem with passage 328. Stem 322 has an orifice 340 communicating an outer surface of the stem with passage 336.

Stem 322 is disposed in chamber 112.

Referring to FIGS. 8A and 8B, duckbill valve 324 is a one-way valve manufactured from rubber or synthetic elastomer that prevents backflow. Duckbill valve 324 has a top or flattened end 402, a middle portion 416, and bottom end or base 404. Bottom 404 and middle portion 416 are annular. Middle portion 416 has a sidewall 420. Bottom 404 has a sidewall 422. A shoulder 418 is formed from a surface connecting bottom 404 and middle portion 416.

When a fluid is pumped through, a flattened end 402 opens to permit the pressurized fluid to pass through in direction 412. When pressure is removed, however, flattened end 402 returns to its flattened shape, preventing backflow in direction 414. Flattened end 402 has a slit 406 that, under pressure, becomes opening 408.

Referring to FIG. 7B, duckbill valve 324 is disposed concentric to and in passage 336 so that flattened end 402 is oriented towards passage 328. Sidewall 420 mates with an inner wall of stem 322, forming a compressive seal therebetween. Shoulder 418 mates with a bottom surface 342 of stem 322, forming a compressive seal therebetween.

Bottom 404 is stretched over an annularly shaped top portion 332 of support feature 330 shown in FIG. 7C, forming a compressive seal therebetween. A shoulder 344 of support feature 330 mates with bottom 404. Top portion 332 fits within an inner core of duckbill valve 324. An annularly shaped bottom portion 334 of support feature 330 that is larger in diameter that top portion 332 extends away from shoulder 344.

As shown in FIG, 7B, top portion 332 of support feature 330 radially compresses against an inner core of bottom 404 and/or middle portion 416 of duckbill valve 324, which causes sidewall 420 of middle portion 416 to compress against an inner surface of stem 322 within passage 336. Sidewall 422 compresses against an inner wall of housing 110, thereby creating an upper chamber 312 and lower chamber 112, so that the sole path for product to flow from lower chamber 112 to upper chamber 312 is through passage 336, through duckbill valve 324, and through orifice 340. Since duckbill valve 324 is a one-way valve, refilling through the stem is not possible.

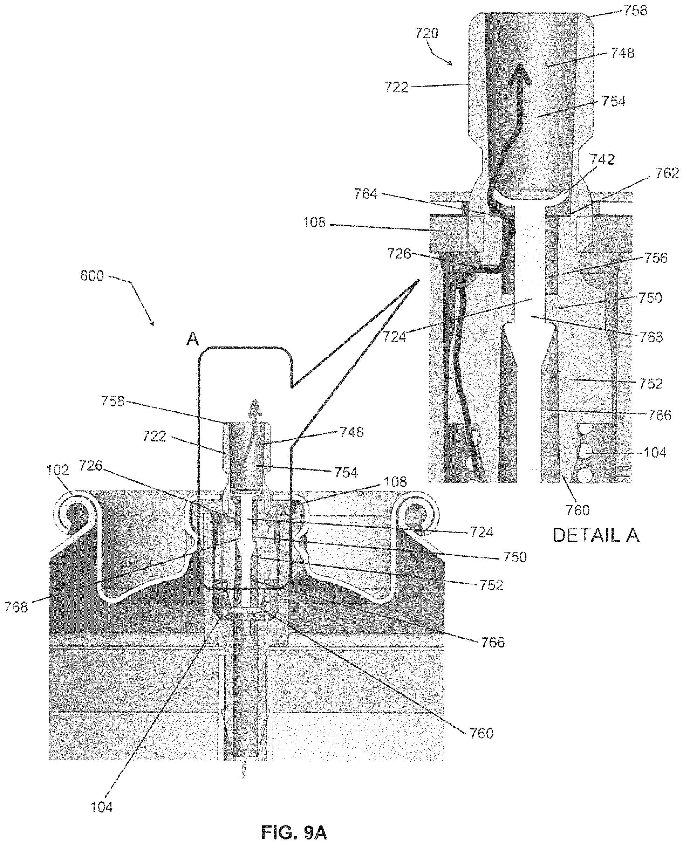

A fourth exemplary embodiment of the present disclosure is shown in FIGS. 9A to 9D, and is a valve assembly generally represented by reference numeral 800. Assembly 800 includes mounting cup 102, biasing member 104, sealing member 108, and a stem assembly 720. Stem assembly 720 is the refill prevention mechanism. Stem assembly 720 includes a stem 722 and a resilient member 724.

Stem 722 is a tubular member with an upper portion 748, a middle portion 750, and a lower portion 752, and a passage therethrough each portion. Upper portion 748 is disposed at a proximal end 758. Lower portion 752 is disposed at a distal end 760. Middle portion 750 is between upper portion 748 and lower portion 752.

Upper portion 748 has two coaxial bores 754 and 756 therethrough. Bore 754 is proximate proximal end 758 and has a larger diameter than bore 756. Bore 756 is proximate middle portion 750. Thus, a seat 762 with a surface 764 is formed at an interface between bore 754 and bore 756 as shown in Details 9A and 9B. An orifice 726 is disposed radially through bore 756.

Middle portion 750 includes a bore 768 therethrough. Bore 768 communicates upper portion 748 with lower portion 752, and has a diameter that is smaller than the diameters of bore 754 and bore 756.

Lower portion 752 has a bore 766 therethrough that also has a larger diameter than bore 768.

Referring to FIGS. 9A to 9D, resilient member 724 is an elongated, elastomeric rod having a distal end 732 and a proximal end 734. A flange portion 736 separates a tail portion 738 and a body portion 740. Body portion 740 has a head that comprises a diaphragm or umbrella sealing disk 742 at distal end 732. Body portion 740 has a diameter that is sized to fit within bore 768, preferably coincident in size, and more preferably to be compressed therein.

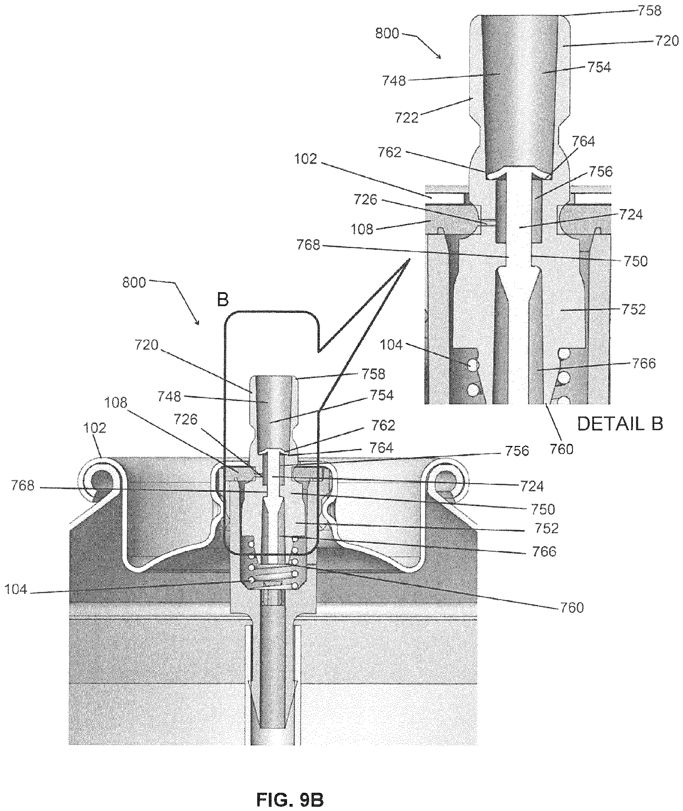

Disk 742 has a convex diaphragm that flattens out against the surface 764. Advantageously, irregularities of surface 764 are obviated due to its flexibility, thus creating a certain sealing force there against when through the stem refilling is attempted, as in FIG. 9B. As in FIG. 9A, when pressure in container 132 is applied against disk 742, flow results. The internal forces lift disk 742 from its seat on surface 764. In this way, resilient member 724 prevents flow in and allows flow out immediately in the opposite way.

Flange portion 736 includes a conical flange 744 having a lip 746 oriented toward distal end 732. Flange portion 736 is compressible enough to fit through bore 768, but in an uncompressed state, lip 746 has a larger diameter to provide a seal between bore 768 and bore 766.

Unlike duckbill valve 324, resilient member 724 does not have a flow path therethrough.

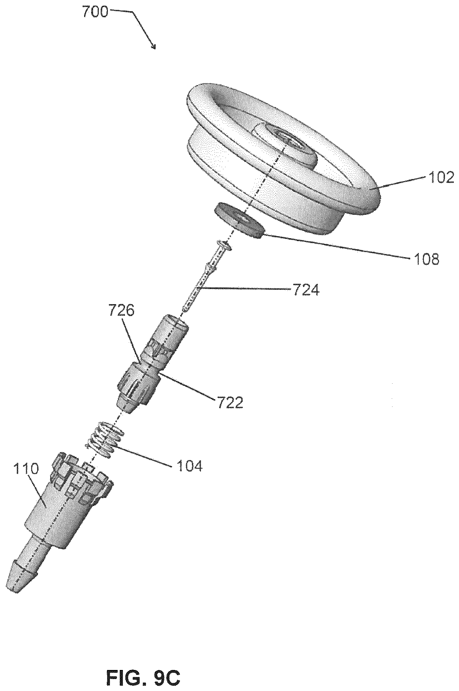

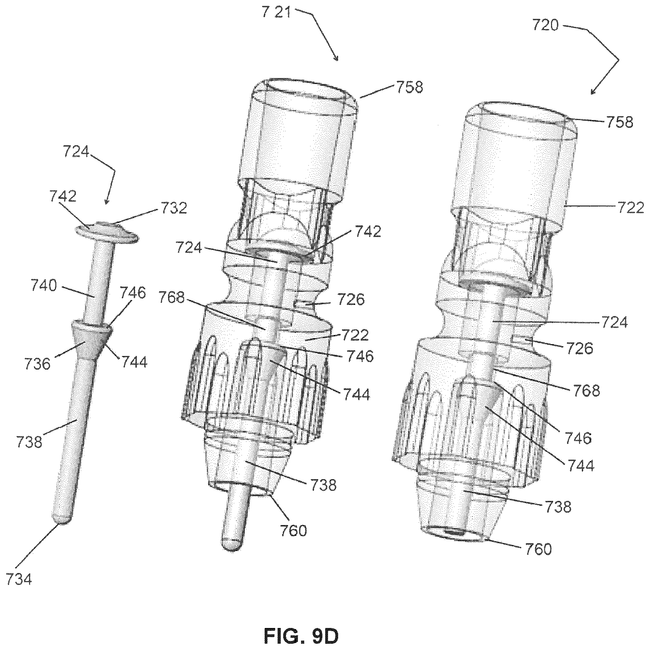

Stem assembly 720 is assembled as shown in FIGS. 9C and 9D. Resilient member 724 is inserted tail first into stem 722 at proximal end 758, and tail portion 738 is pulled through, resulting in intermediate stem assembly 721. Tail portion 738 is trimmed so that it does not extend beyond distal end 760, resulting in stem assembly 720.

Advantageously, resilient member 724 simplifies assembly, reduces the number of pieces in a valve, and prevents refilling through the stem.

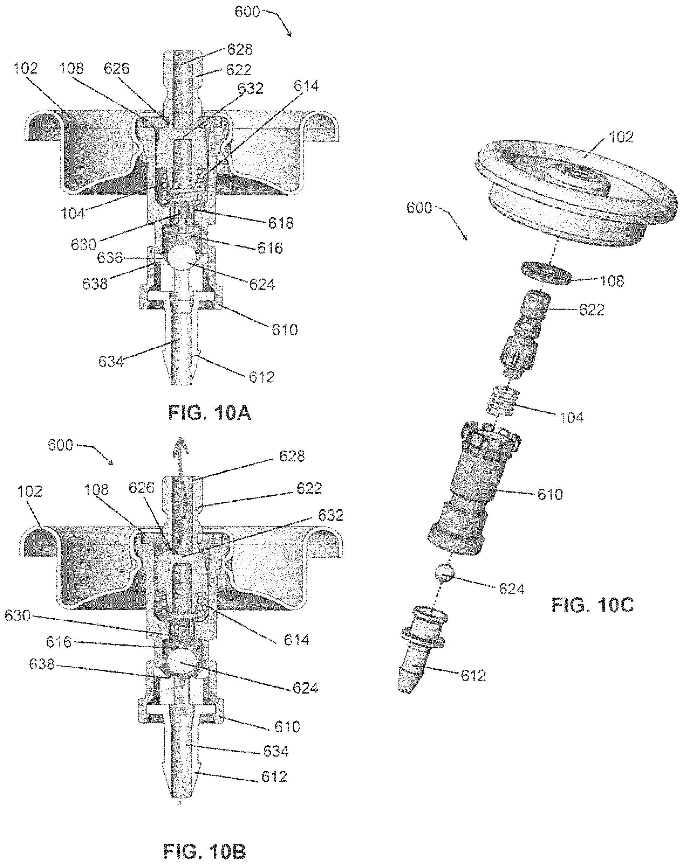

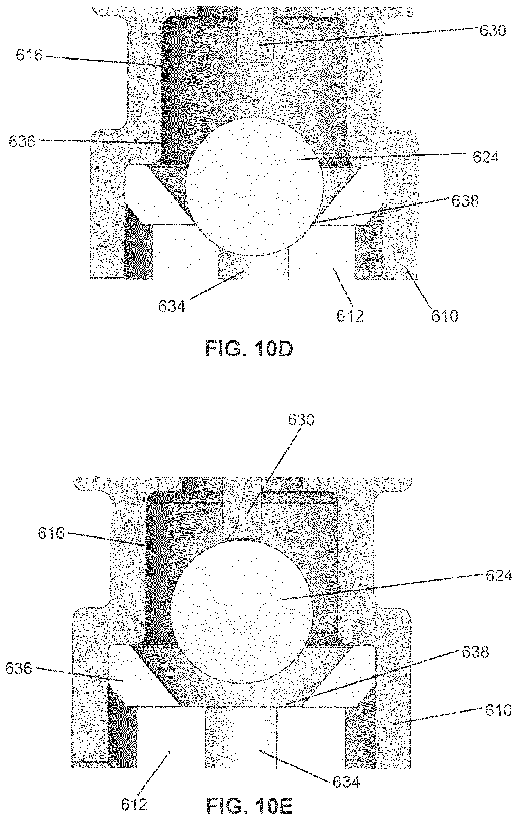

A fifth exemplary embodiment, shown in FIGS. 10A to 10E, is a valve assembly generally represented by reference numeral 600. Assembly 600 also includes mounting cup 102, sealing member 108, and biasing member 104. Assembly 600 further includes a housing 610, a tailpiece 612 and a stem 622. In this embodiment, a ball 624 is the refill prevention mechanism that prevents refilling through the stem. Ball 624 is a solid ball made of corrosion resistant materials. In some embodiments, ball 624 is elastic.

Housing 610 has an upper chamber 614, a lower chamber 616, with an aperture 618 therethrough. Upper chamber 614 receives stem 622. Stem 622 has an orifice 626 that communicates with passage 628. Passage 628 is a bore through the top of stem 622 having a closed bottom 632 located below orifice 626. Movement of stem 622 displaces orifice 626 away from sealing member 108, thereby actuating.

Tailpiece 612 fits in chamber 616 of housing 610. Tailpiece 612 has a passage 634 therethrough. At an upper portion 636 of tailpiece 612, there is located a ball seat 638 for receiving ball 624. Ball 624 conforms to seat 638 so that a seal is created therebetween.

A finger 630 extends into chamber 616 below aperture 618. Finger 630 prevents ball 624 from blocking aperture 618.

When actuated and the container is full, flow through passage 634 pushes ball 624 off of seat 638, vertically displacing the ball and allowing flow around the ball, through aperture 618, into upper chamber 614, through orifice 626 and into passage 628 of stem 622. Again, finger 630 prevents ball 624 from blocking aperture 618.

When actuated for a refilling operation, product flows from chamber 614 through aperture 618 and into chamber 616. Ball 624 is forced into seat 638, thereby blocking off flow to passage 634, and preventing flow through the stem refilling.

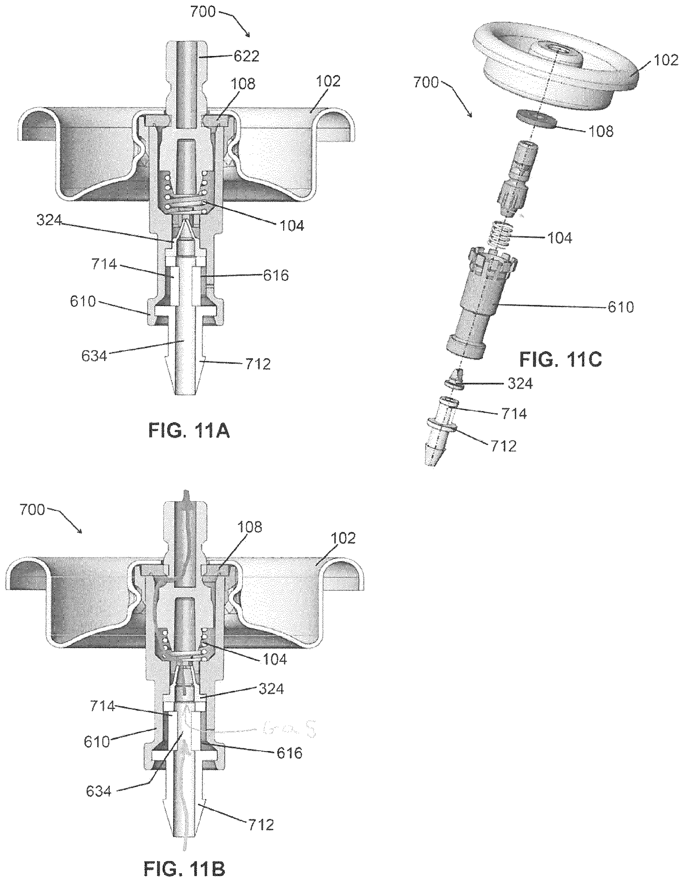

A sixth exemplary embodiment of the present disclosure is shown in FIGS. 11A to 11C, with a valve assembly represented by reference numeral 700. Assembly 700 includes mounting cup 102, sealing member 108, biasing member 104, housing 710, duckbill valve 324, and a tailpiece 712.

Unlike tailpiece 612, tailpiece 712, does not have a tapered ball sealing surface at an upper end. Tailpiece 712 fits in chamber 616 of housing 710. Tailpiece 712 has a passage 634 therethrough that communicates with chamber 616 and the inside of a container. Duckbill valve 324 fits over a top portion of 714 of tailpiece 712 that is disposed in chamber 616. Thus, flow through tailpiece 712 is unidirectional and duckbill valve 324 prevents refilling or flow into tailpiece 712.

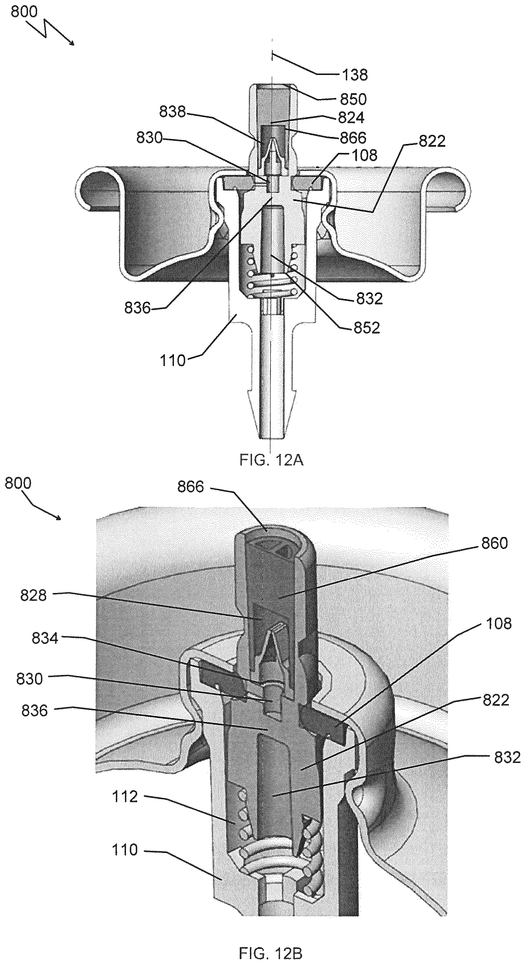

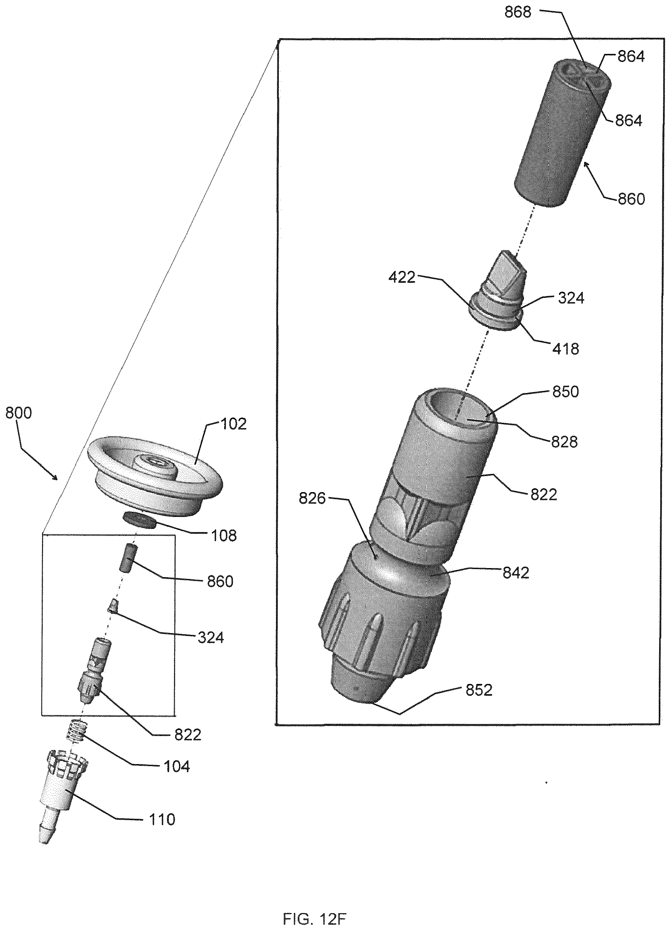

A seventh exemplary embodiment of the valve assembly is shown in FIGS. 12A to 12F and represented by numeral 800. Assembly 800 includes mounting cup 102, biasing member 104, sealing member 108, housing 110, and duckbill valve 324. This embodiment also includes a valve stem 822 in which duckbill valve 324 is disposed and a holder 860 that retains the duckbill valve in the valve stem.

Valve stem 822, like stem 222 does not have a vertical through bore. Thus, valve stem 822 has an upper chamber 824 and a lower chamber 832 separated by a partition 836. Partition 836 is located below a shoulder 842 of valve stem 822.

Upper chamber 824 has two bores 828, 830 therein, each with a different diameter to define upper chamber 824. Bore 828 has a first diameter and is proximate a top 850 of upper chamber 824. Bore 830 has a second, smaller diameter and is proximate a bottom 852 of upper chamber 824. A seat 834 is formed at an interface of bore 828 and bore 830.

Shoulder 842 includes at least one orifice 826 in direct communication with, and perpendicular to, bore 830. Orifice 826 is a transfer conduit between housing 110 and upper chamber 824 of valve stem 822 through which the contents of the aerosol are expelled.

Duckbill valve 324 is vertically oriented in upper chamber 824 so that base 404 sits on seat 834. Duckbill valve 324 is sized so that sidewall 422 abuts an inner surface of bore 828, thus creating a compressive seal therebetween. As previously discussed, duckbill valve 324 is a one-way valve. Further, an inner diameter of shoulder 418 of duckbill valve 324 should be greater than the diameter of bore 830 to prevent flow impediment.

Holder 860 is a generally cylindrical hollow member that has an outer surface 862. In a preferred embodiment, an upper portion of holder 860 has crossbar ribs or one or more radial projections 864 from an inner surface 868 of holder 860. A lower portion of holder 860 is hollow to accommodate duckbill valve 324. The one or more radial projections 864 divide a cross section of holder 860 into a plurality of wedge shaped channels 866 that communicate with the hollow lower portion of holder 860. As shown, there two radial projections 864 or cross bar ribs that bisect each other, thus creating the four wedge shaped channels through holder 860 as shown.

Holder 860 fits in upper chamber 824 and over duckbill valve 324. Specifically, a bottom edge of holder 860 is disposed on shoulder 418 of duckbill valve 324. A seal occurs at the interface thereof. Outer surface 862 can be compressed against the inner surface of bore 828 to further seal the surfaces. During assembly, holder 860 is pressed inside valve stem 822. An advantage of such a press fit is that additional pressure is imparted on shoulder 418 of duckbill valve 324, which in turn is imparted against seat 834.

Advantageously, the one or more projections prevent manipulating and tampering with duckbill valve 324 by obstructing access to upper chamber 824 and holds duckbill valve 324 in place without flow impenitence.

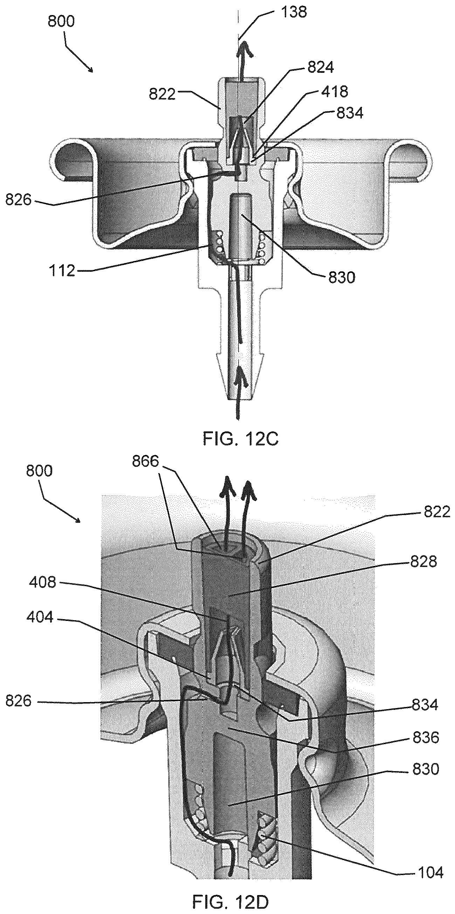

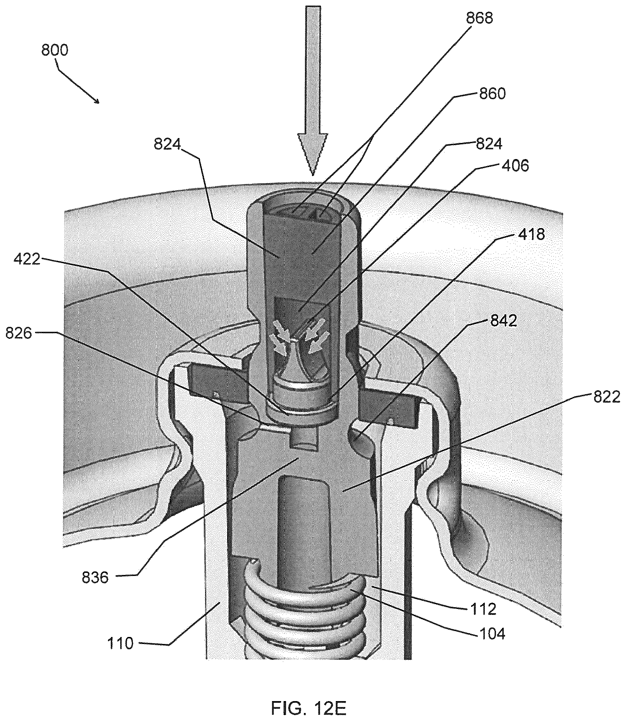

In valve assembly 800, valve stem 822 is disposed in chamber 112 of housing 110. Valve stem 822 extends though sealing member 108 and mounting cup 102. Valve stem 822 is supported by the top end of biasing member 104. Stem 822 is movable along a longitudinal axis 138 through the center of housing 110 from a first or closed position as shown in FIGS. 12A, 12B, and 12E to a second or open position as shown in FIGS. 12C and 12D. In the open position, stem 822 serves the following functions. Stem 822 serves as the connecting transfer conduit between the internal components of an aerosol container and an external actuator (not shown). In the closed position, and as shown in FIG. 12E by the arrows, stem 822 together with duckbill valve 324 is held in place by holder 860 and serves to provide the refilling prevention feature.

Advantageously, since the refilling prevention feature is located entirely in valve stem 822, valve assembly 800 is simple and cost effective to manufacture.

In the closed state as shown in FIGS. 12A and 12B, sealing member 108 seals orifice 826. Orifice 826 is substantially similar to orifice 126 so that when orifice 826, being the sole conduit for transferring the contents of container 132, is blocked, there cannot be flow. Although only shown and described as a single orifice, it will be appreciated that orifice 826 can be a plurality of orifices disposed about a diameter of valve stem 822. In such an embodiment, sealing member 108 simultaneously seals each orifice of the plurality of orifices.

Referring to FIGS. 12C and 12D, the operation to dispense the contents of container 132 will be discussed. Valve assembly 800 is actuated when valve stem 822 is depressed, thereby displacing sealing member 108. The pressure in container 132 forces the contents into housing 110, around a lower portion of valve stem 822, into orifice 826, into bore 830, into duckbill valve 324, through opening 408 thereof and into a lower portion of holder 860, into channels 866 and lastly out of container 132.

As shown in FIG. 12E, the refilling prevention feature prevents refilling. The filling pressure through upper chamber 824, as shown by the arrows, forces opposing sides of duckbill valve 324 together to create a seal at slit 406. Filling pressure further pushes base 404 against seat 834. Thus, the filling content cannot enter duckbill valve 324 that, in turn, prevents flow into bore 830, orifice 826, housing 110, and container 132.

Although described with respect to aerosol containers, the present disclosure is equally applicable to protect other containers from being refilled, such as gas stove containers, medical inhalers, and the like. Thus, aerosol containers using the non-refillable aerosol valve of the present disclosure cannot be refilled, i.e. reused, after final assembly.

When the same reference number is used in different figures of the drawings, the reference number refers to the same or like part. When a certain structural element is described as "is connected to", "is coupled to", or "is in contact with" a second structural element, it should be interpreted that the second structural element can "be connected to", "be coupled to", or "be in contact with" another structural element, as well as that the certain structural element is directly connected to or is in direct contact with yet another structural element.

Unless otherwise stated, as used herein, the term "about" means "approximately" and when used in conjunction with a number, "about" means any number within 10%, preferably 5%, and more preferably 2% of the stated number. Further, where a numerical range is provided, the range is intended to include any and all numbers within the numerical range, including the end points of the range.

It should also be noted that the terms "first", "second", "third", "upper", "lower", and the like may be used herein to modify various elements. These modifiers do not imply a spatial, sequential, or hierarchical order to the modified elements unless specifically stated.

While the present disclosure has been described with reference to one or more exemplary embodiments, it will be understood by those skilled in the art that various changes can be made and equivalents can be substituted for elements thereof without departing from the scope of the present disclosure. In addition, many modifications can be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

## Claims

1. A valve assembly comprising:
a valve housing having an inner chamber and a top;
a sealing member positioned on the top of the valve housing and having an interior opening;
a valve stem positioned in the valve housing and through the opening in the sealing member, the valve stem having an upper portion and an outer wall,
wherein the valve stem has an upper passage disposed in the upper portion of the valve stem that is in communication with an orifice that is through the outer wall of the valve stem, the orifice being in communication with the inner chamber of the valve housing,
wherein the valve stem is moveable in the valve housing between a closed position in which the sealing member seals the orifice from the inner chamber and an open position in which the orifice is displaced away from the sealing member; and
a flexible resilient member disposed in the upper passage of the valve stem,
wherein the flexible resilient member is compressed against the orifice or an aperture of an upper passage communicating with the orifice to create a seal and prevent filling in the open position when a pressure in the upper passage is greater than a pressure in the inner chamber, and
wherein the flexible resilient member is deflected away from the orifice or the aperture of a passage communicating with the orifice when a pressure in the upper passage is less than a pressure in the inner chamber to allow dispensing of a product.

2. The valve assembly of claim 1, wherein the valve stem has a lower passage disposed in a lower portion of the valve stem, wherein the lower passage is in communication with the inner chamber at a distal end of the lower portion and with the upper passage at a proximal end of the lower portion, and wherein the resilient member has tail portion disposed to fill the lower passage and seal the communication between the upper and lower passages.

3. The valve assembly of any one of claims 1 to 2, wherein the flexible resilient member is seated against the orifice or the aperture of the upper passage when a pressure in the upper passage is equal to or greater than a pressure in the inner chamber.

4. The valve assembly of any one of claims 1 to 3, wherein the flexible resilient member is an umbrella valve.

5. The valve assembly of any one of claims 1 to 4, wherein the flexible resilient member is a duckbill valve.

6. The valve assembly of claim 5, further comprising a holder disposed on the duckbill valve.

7. The valve assembly of any one of claims 1 to 6, wherein the flexible resilient member is elastic and stretchable.

8. The valve assembly of any one of claims 1 to 7, wherein the flexible resilient member has a conical recess, and wherein the conical recess flexes outward to seal the orifice.

9. The valve assembly of any one of claims 1 to 8, wherein the flexible resilient member has a conical recess, and wherein the conical recess flexes outward radially to seal the orifice.

10. The valve assembly of any one of claims 1 to 9, wherein the flexible resilient member has a conical recess, and wherein the conical recess flexes inward radially to seal the orifice of the aperture of the upper passage.

11. The valve assembly of any one of claims 1 to 10, wherein the resilient member has a flange disposed at a tail end for positioning the resilient member in the valve stem, and wherein the flange has a flange surface that abuts a stem surface at the distal end of the lower portion.

12. The valve assembly of any one of claims 1 to 11, wherein the valve stem and the flexible resilient member are a co-molded.

13. A valve assembly comprising:
a valve housing having an upper chamber, a lower chamber and a top adjacent the upper chamber;
a housing tailpiece having a seat with a passageway therethrough that is disposed in the lower chamber,
a sealing member disposed on the top of the valve housing;
a valve stem disposed in the valve housing and through the sealing member, the valve stem having an outer wall, an opening and a passage disposed in an upper portion of the valve stem, the passage being in communication with an orifice that is through the outer wall, the orifice being in fluid communication with the lower chamber,
wherein the valve stem is moveable in the valve housing between a closed position in which the sealing member seals the orifice and an open position in which the orifice is displaced away from the sealing member; and
a resilient member disposed in the lower chamber on the seat,
wherein the resilient member is compressed against the seat to create a seal and prevent filling in the open position when a pressure in the upper chamber is greater than a pressure in the tailpiece, and
wherein the resilient member is deflected away from the seat to open the passageway when a pressure in the tailpiece is less than a pressure in the upper chamber to allow dispensing of a product.

14. The valve assembly of claim 13, wherein the resilient member is a duckbill valve oriented to allow flow out of the valve stem.

15. A method of assembling a non-refillable valve; the method comprising p
roviding a valve stem that has passage that extends along a vertical axis between a top and a bottom of the valve stem, an orifice disposed normal to the vertical axis through a wall of the valve stem, and a bottom surface at the bottom of the valve stem;
providing a resilient member that has, in order from a proximal end to a distal end, a tailpiece, a flange, a middle portion, and a head,
wherein the flange has a sealing interface disposed a surface of the flange; w
herein the head has a member with a cylindrical outer surface and conical internal surface with a diameter that decreases from top to bottom;
inserting the tailpiece through the passage from the top to the bottom of the valve stem;
pulling the tailpiece down and through the passage until the flange is pulled through the bottom and the valve stem so that the sealing interface abuts the bottom surface and the cylindrical outer surface covers the orifice; and
trimming the tailpiece.
